**Europäisches Patentamt**

**European Patent Office**

**Office européen des brevets**

(19)

(11) Numéro de publication: **0 170 085**
**B1**

(12) # FASCICULE DE BREVET EUROPÉEN

(45) Date de publication du fascicule du brevet:
04.11.87

(51) Int. Cl.⁴: **B 60 B 21/10,** B 60 C 15/02

(21) Numéro de dépôt: **85108224.8**

(22) Date de dépôt: **03.07.85**

(54) Jante de sécurité comportant un bossage de retenue axiale du bourrelet de grande hauteur, et ensemble pneumatique utilisant une telle jante.

(30) Priorité: **13.07.84 FR 8411488**

(43) Date de publication de la demande:
**05.02.86 Bulletin 86/6**

(45) Mention de la délivrance du brevet:
**04.11.87 Bulletin 87/45**

(84) Etats contractants désignés:
**AT BE CH DE GB IT LI LU NL SE**

(56) Documents cité:
**FR-A-2 254 444**
**GB-A-2 117 332**
**GB-A-2 121 738**
**US-A-4 246 950**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Gergele, Jean, 27, rue de Bellevue St-Hippolyte, F-63140 Chatel- Guyon (FR)**

(74) Mandataire: **Renaudie, Jacques, Michelin & Cie Service K. Brevets, F-63040 Clermont- Ferrand Cédex (FR)**

EP 0 170 085 B1

## Description

La présente invention se rapporte aux jantes, en une seule pièce pour enveloppes de pneumatiques, plus particulièrement à celles dont le profil est de forme étudiée pour retenir le bourrelet sur son siège. Elle concerne également les ensembles pneumatiques constitués d'une enveloppe de pneumatique montée sur une jante.

Comme on le sait, une jante en une seule pièce comporte obligatoirement une gorge circonférentielle centrale pour permettre le montage de l'enveloppe, et deux sièges sur lesquels, sous l'effet de la pression de gonflage, viennent se placer et se coincer les bourrelets de l'enveloppe. Chaque siège est prolongé extérieurement par un rebord de jante.

Lorsqu'est appliqué à l'enveloppe de pneumatique un effort transversal important, par exemple dû à la force centrifuge lors d'un virage pris à grande allure, il peut se produire un décoincement : un bourrelet (du côté extérieur au virage) quitte son siège, se trouve repoussé axialement vers l'intérieur de jante pendant son passage entre la route et la jante parce que la force transversale de réaction à la force centrifuge n'est pas compensée par la force résultant de la pression de gonflage. Le bourrelet risque de s'éloigner axialement de son siège de manière telle qu'il puisse tomber dans la gorge circonférentielle de montage. Il s'ensuit presque toujours une perte de pression et une perte du pouvoir directeur du pneumatique.

On connaît divers moyens visant à améliorer la résistance au décoincement par le choix d'une forme appropriée du profil de la jante. Un de ces moyens consiste à retenir le bourrelet du côté intérieur de la jante par un bossage formant butée, communément désigné par "hump". L'usage de pareils bossages s'est d'ailleurs généralisé pour les ensembles pneumatiques de tourisme montés sans chambre à air. Ces bossages sont de formes normalisées (voir par exemple les normes de l'E.T.R.T.O.).

La demande de brevet FR-A-2 528 362 propose, pour lutter contre le décoincement, un bossage de forme particulière, asymétrique. La hauteur radiale dudit bossage varie entre un minimum et un maximum le long du développement circonférentiel dudit bossage et ce dans au moins deux plans distincts perpendiculaires à l'axe de rotation. Le but poursuivi par cette demande est de disposer, dans chaque plan méridien, un bossage de hauteur agrandie par rapport aux bossages du type précédemment décrit, sans trop augmenter le développement circonférentiel dudit bossage, considéré dans un plan perpendiculaire à l'axe de rotation.

L'efficacité des bossages connus, quoique parfois appréciable, se révèle insuffisante pour maintenir les bourrelets sur leurs sièges dans certaines conditions de roulage. En outre, avec les bossages connus, on rencontre vite des difficultés de montage importantes lorsque l'on cherche à en améliorer l'efficacité en élevant radialement le sommet desdits bossages. En effet, un bourrelet est relativement rigide du fait de la présence d'au moins une tringle, parfois de renforts câbles ou en gomme à haut module d'élasticité. Cette rigidité est nécessaire pour solidariser l'enveloppe avec la jante. Cette rigidité contrarie et limite l'extension radiale de la base du bourrelet et, partant, elle limite la hauteur du bossage qui permette un montage aisé de l'enveloppe. La pleine efficacité des bossages s'en trouve compromise.

Le problème à la base de l'invention a consisté à rechercher le moyen d'utiliser un bossage de grande hauteur radiale, permettant une retenue efficace du bourrelet sur son siège, tout en assurant un montage aisé de ce bourrelet sous le seul effet de la pression de gonflage.

La jante selon l'invention, possédant une gorge circonférentielle centrale, comportant deux sièges de bourrelet, chaque siège étant prolongé du côté axialement extérieur par un rebord et du côté axialement intérieur par un bossage, est remarquable en ce que, d'un côté au moins de la gorge circonférentielle centrale,

a) elle comporte un siège auxiliaire de bourrelet, situé axialement entre ladite gorge circonférentielle centrale et ledit bossage, radialement entre ladite gorge et le sommet dudit bossage, ledit siège auxiliaire se développant circonférentiellement au moins sur un arc de 30°,

b) la surface de raccordement entre ledit sommet dudit bossage et le flanc de ladite gorge, du côté diamétralement opposé audit siège auxiliaire, est inclinée vers ladite gorge, ladite surface inclinée s'étendant circonférentiellement au moins sur un arc de 120°.

Grâce au siège auxiliaire de la jante selon l'invention, lorsque, après avoir introduit les bourrelets dans la gorge de montage de manière usuelle, on soumet l'enveloppe de pneumatique à la pression de gonflage, le bourrelet trouve un point d'équilibre provisoire en s'engageant sur ledit siège auxiliaire, ce qui annule sa tendance naturelle à vouloir franchir le bossage circonférentiellement partout en même temps. Un tel franchissement est impossible lorsque le bossage présente une grande hauteur radiale. Sous l'effet de la pression de gonflage, il franchit le bossage d'abord à l'endroit diamétralement opposé audit siège auxiliaire, c'est-à-dire à l'endroit où l'on a aménagé une surface de raccordement inclinée, et se positionne sur son siège. Le reste du bossage est franchi progressivement. Ainsi, un bossage de grande hauteur peut être franchi de manière alternée.

L'invention est indépendante du siège de bourrelet proprement dit. L'invention permet d'utiliser un bossage formant une butée de hauteur élevée et circonférentiellement régulière le long du bord axialement intérieur du siège de bourrelet. Par "butée de hauteur circonférentiellement régulière", on entend une butée qui n'est interrompue circonférentiellement que pendant une faible longueur, de l'ordre de quelques centimètres, pour faciliter le démontage en repoussant le bourrelet vers la gorge centrale à hauteur d'un endroit où le bossage est interrompu.

De manière avantageuse, la siège auxiliaire se situe radialement à un niveau circonférentiellement variable, partant d'un maximum, diminuant progressivement vers un minimum, puis, de manière symétrique, s'élevant jusqu'au même maximum.

De manière avantageuse, ladit siège auxiliaire s'étend sur un arc d'au moins 120°.

L'invention va être mieux comprise en consultant la description suivante et les dessins s'y rapportant, donnés uniquement à titre d'exemple et de manière non limitative.

La figure 1 est une coupe d'une jante selon l'invention suivant un plan perpendiculaire à l'axe de rotation passant par la gorge circonférentielle centrale.

La figure 2 est une coupe suivant AA à la figure 1.

La figure 3 est une coupe suivant BB à la figure 1.

La figure 4 est une coupe suivant CC à la figure 1.

La figure 5 est une coupe suivant DD à la figure 1.

La figure 6 est une coupe méridienne suivant AB à la figure 1, comportant en plus un bourrelet en début de montage.

La figure 7 représente le bourrelet en position intermédiaire.

La figure 8 représente le bourrelet en fin de montage.

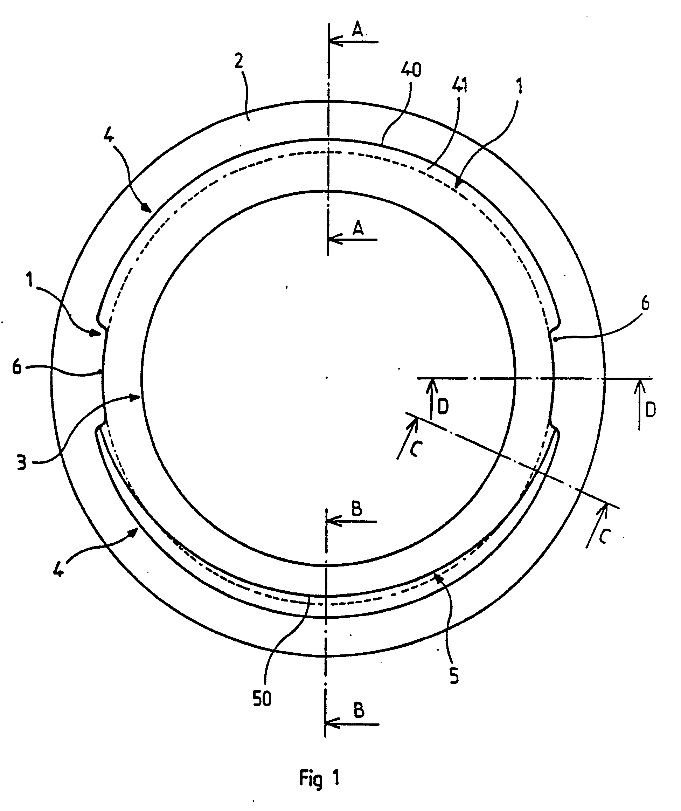

Comme on le voit aux figures 1, 2, 3 et 4, la jante comporte deux sièges (1) de bourrelet prolongés extérieurement chacun par un rebord (2), et une gorge (3) circonférentielle centrale destinée à permettre le montage des bourrelets. Chaque siège de bourrelet est prolongé axialement vers l'intérieur par un bossage (4) formant butée pour retenir axialement le bourrelet sur son siège (1). La hauteur H dudit bossage (4) par rapport au siège (1) est de préférence supérieure ou égale à 3 mm.

De chaque côté de la gorge (3), la jante comporte un siège auxiliaire (5) situé axialement entre la gorge de montage (3) et le bossage (4) de retenue du bourrelet. Ce siège auxiliaire apparaît bien aux figures 1, 3 et 4. Dans l'exemple de réalisation, ledit siège auxiliaire présente une portée (50) située radialement à un niveau qui varie circonférentiellement depuis un maximum "M" à l'azimut de la coupe CC, diminue progressivement vers un minimum "m" à l'azimut de la coupe BB pour augmenter à nouveau, de manière symétrique vers le même maximum. Ledit siège auxiliaire s'étend circonférentiellement sur un arc de 150°. De préférence, la forme circonférentielle de cette portée, les valeurs dudit maximum et dudit minimum doivent être réalisés de manière telle que le développement circonférentiel mesuré à la surface de la jante, dans un plan passant par le siège auxiliaire de montage à l'azimut de la coupe BB et par le sommet du bossage à l'azimut de la coupe soit égal, en première approximation, au développement circonférentiel mesuré sous la tringle de l'enveloppe de pneumatique destinée à être montée sur la jante.

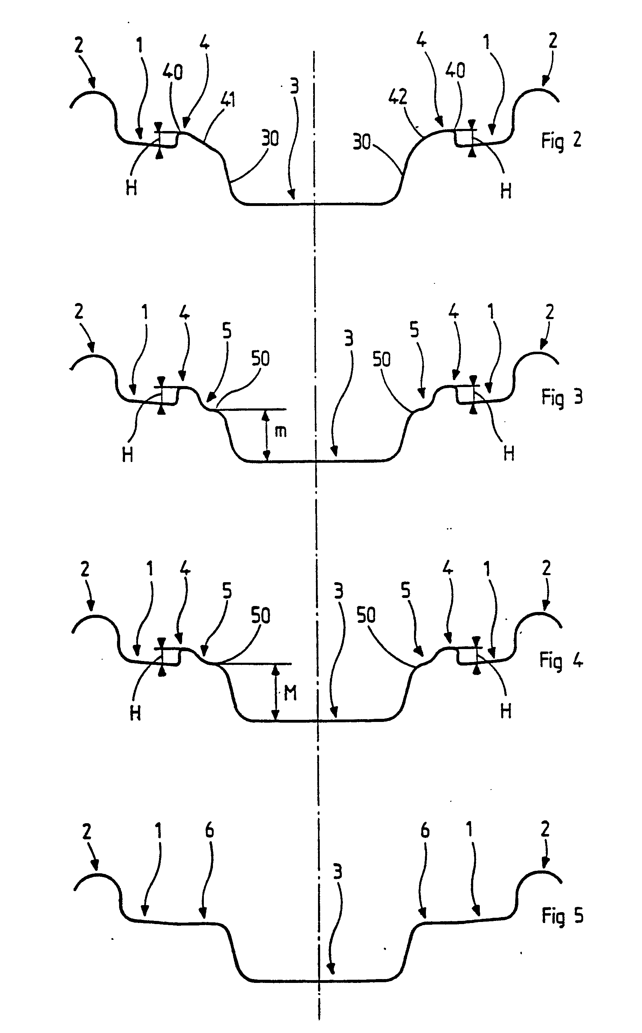

Ladite surface de raccordement inclinée vers ladite gorge est située du côté diamétralement opposé audit siège auxiliaire (5) ; la description du montage d'un bourrelet qui va suivre en fait apparaître clairement le rôle. A la figure 2, on en a représenté deux variantes de réalisation. Dans la partie gauche de la figure 2, ladite surface de raccordement entre le sommet (40) dudit bossage (4) et le flanc (30) de la gorge (3) est constituée par une surface sensiblement conique (41) s'étendant circonférentiellement ssur un arc de 150°. Cette face sensiblement conique (41) apparaît aussi à la figure 1. Dans la partie droite de la figure 2, ladite surface de raccordement entre le sommet (40) dudit bossage (4) et le flanc (30) de la gorge (3) est constituée par une surface torique partielle (42).

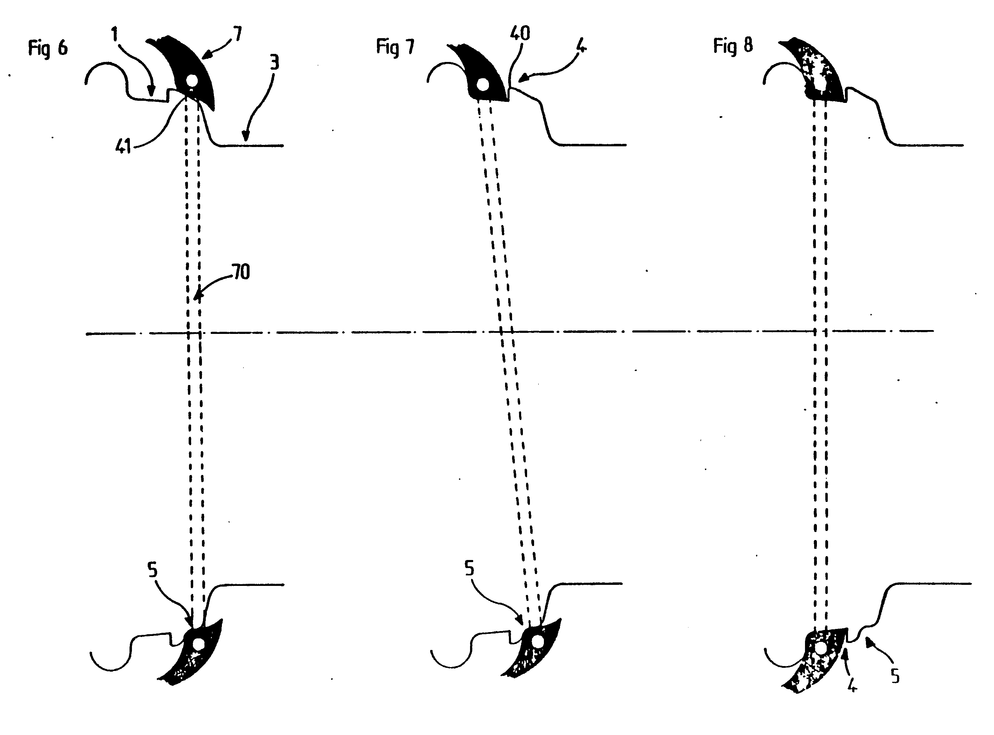

Les figures 6, 7 et 8 permettent de bien comprendre comment s'effectue le montage d'une enveloppe sur une jante selon l'invention. Les références n'ont pas toutes été reprises pour ne pas surcharger inutilement les dessins. On voit à la figure 6 un bourrelet (7) muni d'une tringle (70). Sous l'effet de la pression de gonflage, le bourrelet se positionne sur le siège auxiliaire (5). Au fur et à mesure que la pression de gonflage augmente, le bourrelet (7) glisse le long de la face sensiblement conique (41), puis franchit le sommet (40) du bossage (4) diamétralement opposé au siège auxiliaire (5) (voir figure 7). Par le fait que le franchissement se trouve ainsi initié, le bourrelet continue spontanément ce franchissement de part et d'autre de l'endroit initial. A la fin de ce mouvement, il quitte définitivement le siège auxiliaire (5) - voir figure 8-. L'homme du métier comprend facilement que le rôle de la surface torique partielle (42) est identique à celui de la surface sensiblement conique (41). Plus généralement, il s'agit de dessiner une surface de raccordement inclinée vers la gorge (3) telle qu'elle présente une moindre résistance au déplacement axial du bourrelet (7) sous l'effet de la pression de gonflage que la résistance au déplacement axial du bourrelet (7) présentée par le siège auxiliaire (5). Grâce au profil de jante selon l'invention, qui prévoit une zone où le bourrelet trouve un équilibre provisoire - le siège auxiliaire (5) -, on minimise la déformation du bourrelet nécessaire pour qu'il franchisse une butée de diamètre extérieur donné en organisant un franchissement alterné.

Afin de faciliter le démontage, le bossage (4) peut être interrompu pendant quelques centimètres : les outils de démontage (leviers, etc.) sont utilisés pour repousser le bourrelet (7) de l'enveloppe de pneumatique au droit d'une interruption (6) bien visible aux figures 1 et 5 ; le bourrelet est encore repoussé en un autre endroit proche du premier ; il franchit alors le bossage, tombe dans la gorge (3) centrale et le démontage final se fait de manière classique.

Dans une autre application, l'invention permet de réaliser des ensembles indémontables. Le bossage (4) est alors continu circonférentiellement - pas d'interruption (6) - et la hauteur radiale dudit bossage (4) doit être suffisamment importante, ce qui peut très facilement se déterminer expérimentalement.

**Revendications**

1. Jante en une seule pièce possédant une gorge (3) circonférentielle centrale comportant deux sièges (1) de bourrelet, chaque siège étant prolongé du côté axialement extérieur par un rebord (2), et du côté axialement intérieur par un bossage (4), caractérisée en ce que, d'un côté au moins de la gorge (3) circonférentielle centrale,

a) elle comporte un siège auxiliaire (5) de bourrelet, situé axialement entre ladite gorge (3) circonférentielle centrale et ledit bossage (4), radialement entre ladite gorge (3) et le sommet (40) dudit bossage (4), ledit siège auxiliaire (5) se developpant circonferentiellement au moins sur un arc de 30°,

b) la surface de raccordement entre ledit sommet (40) dudit bossage (4) et le flanc (30) de ladite gorge (3), du côté diamétralement opposé audit siège auxiliaire, est inclinée vers ladite gorge, ladite surface inclinée s'étendant circonférentiellement au moins sur un arc de 120°.

2. Jante selon la revendication 1, caractérisée en ce que ladite surface de raccordement inclinée est une surface sensiblement conique (41).

3. Jante selon la revendication 1, caractérisée en ce que ladite surface de raccordement inclinée est une surface torique partielle (42).

4. Jante selon l'une des revendications 1 à 3, caractérisée en ce que ledit siège auxiliaire (5) se situe radialement à un niveau circonférentiellement variable, partant d'un maximum M, diminuant progressivement vers un minimum m, puis, de manière symétrique, s'élevant jusqu'au même maximum M.

5. Jante selon l'une des revendications 1 à 4, caractérisée en ce que ledit siège auxiliaire (5) s'étend sur un arc de 120° au moins.

6. Jante selon l'une des revendications 1 à 5, caractérisée en ce que ledit siège auxiliaire (5) s'étend sur un arc de 150°.

7. Jante selon l'une des revendications 1 à 6, caractérisée en ce que ladite surface de raccordement inclinée s'étend sur un arc de 150°.

8. Jante selon l'une des revendications 1 à 7, caractérisée en ce que la hauteur H dudit bossage par rapport audit siège (1) est supérieure ou égale à 3 mm.

9. Jante selon l'une des revendications 1 à 8, caractérisée en ce que ledit bossage (4) présente au moins une interruption (6) de faible longueur.

10. Ensemble pneumatique caractérisé en ce qu'il comporte une jante selon l'une des revendications 1 à 8.

**Patentansprüche**

1. Einstückige Felge mit einer zentralen Umfangseinschnürung (3), die zwei Wulsteitze (1) aufweist, wobei jeder Sitz auf der axial äußeren Seite durch einen Rand (2) verlängert ist und auf der axial inneren Seite durch eine Erhebung (4), dadurch gekennzeichnet, daß auf zumindest einer Seite der zentralen Umfangseinschnürung (3)

(a) ein Wulstzusatzsitz (5) axial zwischen der zentralen Umfangseinschnürung (3) und der Erhöhung (4) und radial zwischen der Einschnürung (3) und dem Scheitel (40) der Erhöhung (4) vorgesehen ist, der zusätzliche Sitz (5) erstreckt sich in Umfangsrichtung über einen Bogen von zumindest 30°,

(b) die Verbindungsoberfläche zwischen dem Scheitel (40) der Erhebung (4) und der Flanke (30) der Einschnürung (3) auf der Seite, die dem Zusatzsitz diametral gegenüberliegt, gegen die Einschnürung geneigt ist, wobei die geneigte Oberfläche sich in Umfangsrichtung über einen Bogen von zumindest 120° erstreckt.

2. Felge nach Anspruch 1, dadurch gekennzeichnet, daß die geneigte Verbindungsoberfläche eine im wesentlichen konische Oberfläche (41) ist.

3. Felge nach Anspruch 1, dadurch gekennzeichnet, daß die geneigte Verbindungsfläche eine Torusteilfläche (42) ist.

4. Felge nach einem der Ansprüche 1 bis 3, dadurch gekennzeichnet, daß der zusätzliche Sitz (5) radial ein in Umfangsrichtung variables Niveau aufweist, welches von einem Maximum M ausgeht, zu einem Minimum m fortschreitend abnimmt und dann in symmetrischer Weise bis zum selben Maximum M wieder zunimmt.

5. Felge nach einem der Ansprüche 1 bis 4, dadurch gekennzeichnet, daß der zusätzliche Sitz (5) sich über einen Bogen von zumindest 120° erstreckt.

6. Felge nach einem der Ansprüche 1 bis 5, dadurch gekennzeichnet, daß der zusätzliche Sitz (5) sich über einen Bogen von 150° erstreckt.

7. Felge nach einem der Ansprüche 1 bis 6, dadurch gekennzeichnet, daß die geneigte Verbindungsoberfläche sich über einen Bogen von 150° erstreckt.

8. Felge nach einem der Ansprüche 1 bis 7, dadurch gekennzeichnet, daß die Höhe H der Erhebung bezüglich des Sitzes (1) größer oder gleich 3 mm ist.

9. Felge nach einem der Ansprüche 1 bis 8, dadurch gekennzeichnet, daß die Erhebung (4) zumindest eine Unterbrechung (6) geringer Länge aufweist.

10. Pneumatisches Ensemble, dadurch gekennzeichnet, daß es eine Felge nach einem der Ansprüche 1 bis 8 aufweist.

**Claims**

1. A single-piece rim for a pneumatic tire having a central circumferential groove (3) and comprising two principal bead seats (1), each principal bead seat being extended on the axially outer side by a flange (2) and on the axially inner side by a hump (4), characterized by the fact that, on at least one side of the central circumferential groove (3),

(a) the rim comprises an auxiliary bead seat (5) located axially between the central circumferential groove (3) and the hump (4), radially between said groove (3) and the top (40) of said hump (4) said auxiliary bead seat (5) has a circumferential development over an arc of at least 30°,

(b) the connecting surface between the top (40) of said hump (4) and the side (30) of said groove (3), on the side diametrically opposite said auxiliary bead seat, is inclined towards said groove (5), said inclined connecting surface extending circumferentially over an arc of at least 120°.

2. A rim according to claim 1, characterized by the fact that said inclined connecting surface is substantially conical surface (41).

3. A rim according to claim 1, characterized by the fact that said inclined connecting surface is a partial toroidal surface (42).

4. A rim according to any of claims 1 to 3, characterized by the fact that said auxiliary bead seat (5) is located radially at a circumferentially variable level, starting from a maximum, gradually decreasing towards a minimum and then increasing symmetrically towards the same maximum.

5. A rim according to any of claims 1 to 3, characterized by the fact that said auxiliary bead seat (5) extends circumferentially over an arc of at least 120°.

6. A rim according to claim 5, characterized by the fact that said auxiliary bead seat (5) extends circumferentially over an arc of 150°.

7. A rim according to any of claims 1 to 3, characterized by the fact that said inclined connecting surface extends circumferentially over an arc of 150°.

8. A rim according to any of claims 1 to 3, characterized by the fact that the height of said hump with respect to said principal bead seat (1) is at least equal to 3 millimeters.

9. A rim according to any of claims 1 to 3, characterized by the fact that said hump (4) has at least one circumferential interruption (6) of small length.

10. A tire assembly characterized by the fact that the assembly comprises a pneumatic tire mounted on a rim according to any of claims 1 to 3.

Fig 1

Fig 2

Fig 3

Fig 4

Fig 5

Fig 6    Fig 7    Fig 8

0 170 085